# EUROPÄISCHE PATENTSCHRIFT

(11) **EP 1 073 608 B1**
(45) Veröffentlichungstag und Bekanntmachung des Hinweises auf die Patenterteilung: **31.10.2001**
(21) Anmeldenummer: 99919213.1
(22) Anmeldetag: 31.03.1999
(51) Int. Cl.: C01B 15/029, B01J 8/02

(54) **VERFAHREN ZUR HERSTELLUNG VON WASSERSTOFFPEROXID DURCH DIREKTSYNTHESE**
METHOD FOR PRODUCING HYDROGEN PEROXIDE BY DIRECT SYNTHESIS
PROCEDE DE PRODUCTION DE PEROXYDE D'HYDROGENE PAR SYNTHESE DIRECTE

(30) Priorität: 11.04.1998 DE 19816296
(43) Veröffentlichungstag der Anmeldung: 07.02.2001
(73) Patentinhaber: Degussa AG, 40474 Düsseldorf (DE)
(72) Erfinder: BERTSCH-FRANK, Birgit, D-63584 Gründau (DE); BALDUF, Torsten, D-63456 Hanau (DE); BECKER-BALFANZ, Catrin, D-65929 Frankfurt (DE); HEMME, Ina, D-63450 Hanau (DE); ROLLMANN, Jürgen, D-63762 Pflaumheim (DE); SCHÜTTE, Rüdiger, D-63755 Alzenau (DE); WILDNER, Werner, D-63755 Alzenau (DE)
(86) Internationale Anmeldenummer: EP9902372
(87) Internationale Veröffentlichungsnummer: WO9952820

(56) Entgegenhaltungen:
- EP-A- 0 579 109
- WO-A-97/32815

## Beschreibung

Die Erfindung betrifft ein Verfahren zur Herstellung von Wasserstoffperoxid in Form einer wäßrigen Lösung durch Direktsynthese aus Wasserstoff und Sauerstoff. Die Synthese erfolgt an einem heterogenen Katalysator in Gegenwart von Wasser.

Die direkte Synthese von Wasserstoffperoxid durch Umsetzung von Wasserstoff mit Sauerstoff in einem sauren wäßrigen Medium in Gegenwart eines Edelmetall-Trägerkatalysators ist aus verschiedenen Dokumenten bekannt - beispielhaft wird auf die US-Patente 4,009,252 und 4,681,751 und auf das EP-Patent 0 274 830 verwiesen. Bei den in diesen Dokumenten beschriebenen Verfahren wird ein rein wäßriges Reaktionsmedium eingesetzt, das zum Zwecke der Inhibierung der Zersetzung von gebildetem Wasserstoffperoxid eine starke Säure, wie H₂SO₄ und/oder HCl, enthält. Pd auf Aktivkohle oder andere Pd und/oder Pt enthaltende heterogene Katalysatoren katalysieren die Umsetzung. Durch den Zusatz eines Bromid-Promotors wird die Selektivität erhöht. Diesen Verfahren haften verschiedene Probleme an, darunter eine zu niedrige Selektivität, und/oder zu geringe H₂O₂-Konzentration und niedrige Raum-Zeit-Ausbeute, ein zu hoher Katalysatoraustrag und eine hohe Korrosivität.

Viele Dokumente richten sich auf die Bereitstellung verbesserter Katalysatoren für das gattungsgemäße Verfahren, um das Auflösen des Katalysators und/oder die korrosiven Eigenschaften des Mediums zu mindern - beispielhaft wird auf die EP-A 0 366 419, EP-A 0 498 166, EP-A 0 504 741 und EP-A 0 492 064 verwiesen.

Das gattungsgemäße Verfahren kann gemäß EP-A 0 366 419 durchgeführt werden, indem ein H₂ und O₂ enthaltendes Gasgemisch über ein in einem Rieselbettreaktor angeordnetes Katalysatorbett geleitet wird, während gleichzeitig im Gleichstrom eine H₂SO₄ und HCl enthaltende wäßrige Phase über das Katalysatorbett rieselt; die wäßrige Phase wird im Kreis geführt. Zwar wird bei diesem Verfahren unter Verwendung eines auf einem hydrophoben Träger gebundenen Edelmetallkatalysators unter den üblichen Druck- und Temperaturbedingungen eine hohe Selektivität erzielt, dieser steht aber als Nachteil eine sehr niedrige H₂O₂- Konzentration (0,15 bis 0,3 %) entgegen. Zur Gewinnung marktüblicher H₂O₂-Lösungen müssen sich aufwendige und damit die Wirtschaftlichkeit mindernde Konzentrierungs- und/oder Destillationsstufen anschließen.

Eine Verbesserung des zuvor gewürdigten Verfahrens lehrt das Dokument EP-A 0 579 109. Auch hier rieselt eine flüssige Phase im Gleichstrom zum eingesetzten H₂ und O₂ enthaltenden Gasgemisch über ein Katalysatorbett auf der Basis eines an Aktivkohle, einem anorganischen Oxid oder Sulfat gebundenen Edelmetalls. Wesentlich ist die Einhaltung eines Volumenverhältnisses der Gasphase zur Flüssigphase im Bereich von 500 bis 10000. Beispielsgemäß wird bei guter Selektivität bezüglich H₂ eine wäßrige Wasserstoffperoxidlösung mit einem H₂O₂-Gehalt um etwa 5 Gew.-% erhalten. Auch diese gegenüber marktgängigen H₂O₂- Konzentrationen niedrige H₂O₂-Konzentration macht im Regelfall eine sich an dieses Verfahren anschließende Konzentrierung erforderlich.

Gemäß dem im US-Patent 5,169,618 beschriebenen Verfahren werden eine H₂ und O₂ enthaltende Gasphase, zweckmäßigerweise eine solche mit einem Partialdruckverhältnis von H₂ zu O₂ von etwa 1 zu 10, und eine saure wäßrige Phase in einer pulsförmigen Strömung über ein Katalysator-Festbett geleitet. Die aus dem Reaktor austretende flüssige Phase und Gasphase werden aufgestockt und dann wieder im Kreis geführt. Durch das pulsförmige Fließsystem sollen ein verbesserter Übergang von H₂ zum Katalysator und dadurch eine erhöhte Raum-Zeit-Ausbeute erzielt werden. Bei dieser Fahrweise ist es möglich, eine wäßrige Lösung aus dem Kreislauf abzuziehen, welche bis zu 20 Gew.-% Wasserstoffperoxid enthält. Die Aufrechterhaltung des "pulse-flow-regimes" ist ausweislich des Beispiels bei einem Volumenverhältnis von Gasphase zu Flüssigphase um 100 bis 150 zwar möglich, jedoch verfahrens- und steuerungstechnisch aufwendig. Es bestand somit Bedarf an einem einfacher handhabbaren Verfahrenskonzept.

Gleichfalls unter Verwendung eines Katalysator-Festbetts, jedoch in Abwesenheit jeglichen Lösungsmittels arbeitet das Verfahren gemäß WO 97/32812. Das durch das Festbett strömende Reaktionsgasgemisch ist an Wasser und Wasserstoffperoxid ungesättigt. Gebildetes Wasserstoffperoxid wird in einer dem Reaktor nachgeschalteten Separationsstufe vom Reaktionsgas abgetrennt. Da die Umsetzung in Abwesenheit einer Flüssigkeit erfolgt, sind die Reaktionsgeschwindigkeit und Ausbeute hoch. Nachteilig ist, daß ein sehr großes Gasvolumen umgewälzt werden muß, um eine Kondensation von H₂O und H₂O₂ im Reaktor zu vermeiden. Zur Isolierung des Wasserstoffperoxids muß der Druck in der nachgeschalteten Separationsstufe stark erhöht und/oder die Temperatur erniedrigt werden. Bei der Verdichtung einer H₂O₂-haltigen Gasphase besteht aber ein hohes Sicherheitsrisiko und zudem ist die Verdichtungsstufe technisch aufwendig.

Aufgabe der Erfindung ist die Bereitstellung eines weiteren gattungsgemäßen Verfahrens, wonach unmittelbar eine wäßrige H₂O₂-Lösung mit einem Gehalt von mindestens 10 Gew.-% aus dem Reaktor entnommen werden kann. Das Verfahren sollte technisch sicher und einfach handhabbar sein.

Die Aufgabe wird gelöst durch ein Verfahren zur Herstellung einer wäßrigen Lösung von Wasserstoffperoxid, umfassend eine direkte Synthese aus Wasserstoff und Sauerstoff, wobei ein Wasserstoff und Sauerstoff enthaltendes Gasgemisch in Gegenwart von Wasser kontinuierlich über die Oberfläche eines in einem Reaktor als Festbett oder Wandbeschichtung angeordneten heterogenen Katalysators strömt und die gebildete wäßrige Wasserstoffperoxidlösung am unteren Ende des Reaktors entnommen wird, das dadurch gekennzeichnet ist, daß man dem Reaktor ein Wasserstoff und Sauerstoff enthaltendes Gasgemisch zuführt, das an Wasserdampf im wesentlichen gesättigt oder übersättigt ist, innerhalb des Reaktors einen Teil des Wasserdampfes zur Kondensation und/oder Koaleszenz bringt, ein Verhältnis von eingeführtem Gasgemisch (Nl/h) zu entnommener Flüssigkeit (l/h) von größer 15.000 einstellt und das den Reaktor verlassende Gasgemisch nach Aufstockung mit Wasserstoff, Sauerstoff und Wasserdampf rezykliert.

Im erfindungsgemäßen Verfahren wird die flüssige Phase, welche über das Katalysatorbett oder entlang der katalysatorbeschichteten Wände rieselt, durch Kondensation und/oder Koaleszenz eines Teils des im eingesetzten Gasgemisch enthaltenden Wasserdampfs erzeugt. Beim Einsatz eines an Wasserdampf im wesentlichen gesättigten Gasgemischs - der Begriff "im wesentlichen" steht für 80 bis 100 % Sättigungsgrad - wird durch Absenkung der Temperatur im Reaktor der Taupunkt unterschritten. Zweckmäßigerweise wird ein an H₂O nahezu gesättigtes oder vorzugsweise übersättigtes Gasgemisch eingesetzt. Beim Einsatz eines übersättigten, also Wassernebel enthaltenen Gasgemischs, kann die Temperatur im Reaktor konstant gehalten werden. Bei Bedarf kann eine größere Flüssigkeitsmenge durch zusätzliches Absenken der Temperatur erhalten werden. Die gewünschte Menge Wasser, die für die Konzentration des gebildeten Wasserstoffperoxids wesentlich ist, kann also über das Temperaturprofil im Reaktor und/oder den Wasserdampfbeziehungsweise Nebelgehalt im Gasgemisch geregelt werden.

Zweckmäßigerweise werden die Gasphase und die sich bildende Flüssigkeitsphase im Gleichstrom geführt, da bei dieser Fahrweise ein Fluten des Reaktors leicht vermieden werden kann. Um eine hohe Raum-Zeit-Ausbeute zu erzielen, wird Wasser nicht auf das Katalysatorbett aufgetröpfelt, sondern in vernebelter Form, erhältlich beispielsweise durch Verdichtung der als O₂-Quelle dienenden Luft, zugeführt. Damit wird eine gleichmäßige Reaktionsführung gewährleistet. Durch den Einsatz eines im wesentlichen an Wasserdampf gesättigten oder nebelhaltigen Gasgemischs werden eine Überhitzung des Katalysators und Absenkung der Selektivität vermieden und unmittelbar eine wäßrige Wasserstoffperoxidlösung mit der gewünschten Konzentration erhalten.

Die im eingesetzten Gasgemisch enthaltenen Reaktionsgase Wasserstoff und Sauerstoff werden im Reaktor nur teilweise umgesetzt. Das den Reaktor verlassende Gasgemisch wird nach seiner Aufstockung mit Wasserstoff, Sauerstoff und Wasserdampf wieder dem Reaktor zugeführt. Der H₂-Umsatz innerhalb des Reaktors und damit die H₂O₂- Bildungsgeschwindigkeit ist bestimmend für die Höhe der Gasumwälzung. Erfindungswesentlich ist die Aufrechterhaltung eines bestimmten Verhältnisses von pro Zeiteinheit eingeführtem Gasgemisch zu entnommener Flüssigkeit - das Verhältnis soll gleich oder vorzugsweise größer als 15.000 betragen. Besonders bevorzugt wird ein Verhältnis im Bereich von 20.000 bis 50.000, insbesondere 25.000 bis 40.000, eingestellt. Die geringe Menge Flüssigphase, bezogen auf die Gasphase, gestattet eine rasche Umsetzung der Gase H₂ und O₂ an der Katalysatoroberfläche mit hoher H₂-Selektivität bezüglich der H₂O₂-Bildung und die Gewinnung einer wäßrigen Wasserstoffperoxidlösung mit hoher H₂O₂-Konzentration in hoher Ausbeute.

Das einzusetzende H₂, O₂, Wasserdampf und gegebenenfalls Inertgase enthaltende Gasgemisch sollte aus Sicherheitsgründen zweckmäßigerweise eine nicht-detonationsfähige Zusammensetzung aufweisen. Der H₂-Gehalt wird im allgemeinen auf Werte um 6 Vol.-% begrenzt; vorzugsweise liegt der H₂-Gehalt im Bereich von 3 bis 5 Vol.-%. Der Sauerstoffgehalt im Gasgemisch kann stöchiometrisch oder überstöchiometrisch sein. Zweckmäßigerweise wird Sauerstoff ausschließlich oder überwiegend in Form von Luft eingesetzt. Der O₂-Gehalt im einzusetzenden Gasgemisch liegt im allgemeinen im Bereich von 10 bis 20 Vol.-%, insbesondere 18 bis 19 Vol.-%. Der erforderliche Wasserdampf kann dem Gasgemisch mit der verwendeten Luft oder als solcher zugeführt werden. An Wasserdampf übersättigtes Gasgemisch enthält Wasser in Form von Nebel.

Die Bedingungen bezüglich Druck und Temperatur entsprechen jenen, wie sie aus dem Stand der Technik bekannt sind. So kann die Reaktionstemperatur im Bereich von 0 bis 90 °C liegen, bevorzugt wird aber ein Temperaturbereich von 20 bis 70 °C. Der Druck kann im Bereich von Atmosphärendruck bis etwa 10 MPa liegen. Vorzugsweise wird die Umsetzung im Bereich von 0,5 bis 5 MPa durchgeführt. Es ist ein besonderer Vorteil des erfindungsgemäßen Verfahrens, daß hier bei niedrigeren Drucken, wie insbesondere 1 MPa bis unterhalb 5 MPa, gearbeitet werden kann.

Im erfindungsgemäßen Verfahren können für die Umsetzung bekannte Katalysatoren eingesetzt werden. Hierbei handelt es sich um solche mit einem oder mehreren Elementen der 8. und/oder 1. Nebengruppe des Periodensystems, insbesondere Elementen aus der Reihe Ru, Rh, Pd, Ir, Pt und Au, wobei Pd und Pt besonders bevorzugt sind. Das oder die katalytisch wirksamen Elemente sind meistens an einen teilchenförmigen Träger gebunden, sie können aber auch in Form einer Beschichtung mit ausreichend großer wirksamer Oberfläche auf einem mit Kanälen versehenen monolithischen Träger oder auf anderen flächigen Trägern angeordnet sein. Besonders bevorzugt werden trägergebundene Edelmetallkatalysatoren verwendet, da sich diese zum Einsatz in Rieselbettreaktoren als feste Schüttung mit vorbestimmter Partikelgröße eignen. Die Partikelgröße geeigneter Träger liegt im allgemeinen Bereich von etwa 0,01 bis etwa 5 mm, insbesondere im Bereich von 0,05 bis 2 mm. Der Edelmetallgehalt im Trägerkatalysator beträgt im allgemeinen 0,01 bis 10 Gew.-%.

Als Trägermaterialien eignen sich außer Aktivkohlen wasserunlösliche Oxide, Mischoxide, Sulfate, Phosphate und Silikate von Erdalkalimetallen, Al, Si, Sn und Metallen der 3. bis 6. Nebengruppe. Aktivkohlen sind meist bevorzugte Träger, jedoch sollte bei der Auswahl darauf geachtet werden, daß sie auf Wasserstoffperoxid möglichst wenig zersetzend wirken. Unter den Oxiden werden im allgemeinen SiO₂, Al₂O₃, SnO₂, TiO₂, ZrO₂, Nb₂O₅ und Ta₂O₅ und unter den Sulfaten Bariumsulfat bevorzugt.

Bei der Auswahl eines geeigneten Trägermaterials ist es gemäß einer besonderen Ausführungsform vorteilhaft, wenn der Träger saure Zentren aufweist, welche auf gebildetes Wasserstoffperoxid stabilisierend wirken. Der Träger kann beispielsweise eine Mineralsäure, wie insbesondere Schwefelsäure, Phosphorsäure oder eine Heteropolysäure in fixierter Form enthalten, oder ein saures Oxid, wie V₂O₅, ist Bestandteil eines Mischoxids. Bei anderen sauren Trägern handelt es sich um saure anorganische oder organische Ionenaustauscher, wie saure Zeolithe, etwa ZSM5, ferner Sulfonsäuregruppen enthaltende Polysiloxane, Sulfonsäure- oder Phosphonsäuregruppen enthaltende makroporöse organische Ionenaustauscher.

Gemäß einer weiteren Ausbildungsform erfolgt die Umsetzung in Gegenwart einer Säure, insbesondere einer Mineralsäure, wie Schwefelsäure, Salzsäure, Phosphorsäure. Diese Säuren können in flüssiger Form, etwa einer wäßrigen Lösung, auf das Katalysatorbett aufgebracht werden. Alternativ können auch saure Gase, wie SO₂, SO₃, NO₂ und HCl, dem einzusetzenden Gasgemisch in kleiner Menge zugesetzt werden, um die Zersetzung von H₂O₂ zu mindern. Auch der Zusatz von Cokatalysatoren, wie Halogeniden, insbesondere Bromiden, ist bekannt. Derartige Halogenide können am Katalysatorträger fixiert sein oder während der Umsetzung in Pulverform oder als Lösung dem System zugeführt werden.

Die im erfindungsgemäßen Verfahren zu verwendenden Reaktoren sind vorzugsweise als Rieselbettreaktoren ausgebildet. Rohrförmige Reaktoren erlauben durch einen darum angeordneten Kühlmantel ein einfaches Abführen der Reaktionswärme. In derartigen Reaktoren wird der Gasstrom oben eingeführt, und die gebildete wäßrige Wasserstoffperoxidlösung und wasserdampfgesättigtes H₂ und O₂ enthaltendes Gas treten unten aus. Gemäß einer anderen Ausführungsart befindet sich der Katalysator auf der Oberfläche von im Reaktor angeordneten metallischen oder keramischen Wänden, welche beispielsweise anlog einem plattenförmigen Wärmeaustauscher angeordnet und ausgebildet sind, oder auf der Oberfläche von Kanälen von monolithischen Katalysatorblöcken.

Die Erfindung wird anhand der nachfolgenden Beispiele weiter beleuchtet.

### Beispiele

Das erfindungsgemäße Verfahren wurde in einer Laborrieselbettapparatur gemäß Figur erprobt:

Ein mit einem Kühlmantel versehener rohrförmiger Doppelmantelreaktor 1 enthält im Innenrohr ein Katalysatorbett 2. Die Gasumlaufleitung 3 enthält den für den Umlauf erforderlichen Kompressor 4, sie führt aus dem Unterteil des Reaktors, welcher der Gas-Flüssigkeits-Trennung dient, heraus und in den oberen Teil des Reaktors hinein. In die Gasumlaufleitung münden Leitungen zum Einspeisen von Wasserstoff 5, Wasserdampf 6, Sauerstoff oder Luft 7 und bei Bedarf gasförmigen Additiven 8; alternativ können Additive gasförmig oder flüssig auch über eine Leitung 9 in den Reaktorkopf gelangen. Wäßrige H₂O₂- Lösung wird am Reaktorboden über Leitung 10 abgezogen. Überschußgas kann über Leitung 11 ausgeschleust werden.

Der Versuchsreaktor hatte einen Innendurchmesser von 18 mm und eine Länge von 400 mm. Die Katalysatorfüllung betrug 100 ml und bestand aus Strangpreßlingen (1,8 mm) aus 1 % Palladium auf Aktivkohle.

Die Reaktionsbedingungen und Ergebnisse folgen aus der Tabelle. In allen Beispielen wurde als Sauerstoffkomponente synthetische Luft in Druckgasflaschen von Messer Griesheim eingesetzt. (Zusammensetzung 21 Vol.-% Sauerstoff, Rest Stickstoff). Die Umsetzung erfolgte in Gegenwart einer Säure und eines Bromids, welche als wäßrige Lösung eindosiert wurden. In den Versuchen 1 bis 3 wurde ohne Gasrezyklierung gearbeitet, d. h. das Abgas wurde vollständig abgeblasen. In Versuch 4 wurde das Abgas mit synthetischer Luft und Wasserstoff aufgetockt. Ein Teil des Abgases wurde abgeblasen, um Inertstickstoff auszuschleusen.

**Tabelle:**

| Beispiel Nr. | 1 | 2 | 3 | 4 |
|---|---|---|---|---|
| | | | | |
| mit/ohne Gasrezyklierung | ohne | ohne | ohne | mit |

| Eingesetztes Gasgemisch (Vol.-%) | | | | |
|---|---|---|---|---|
| | | | | |
| H₂ | 4,0 | 4,0 | 4,0 | 4,0 |
| | | | | |
| O₂ | 20,0 | 20,0 | 20,0 | 15,0 |
| | | | | |
| N₂ | 75,4 | 75,4 | 75,7 | 80,9 |
| | | | | |
| H₂O | 0,62 | 0,62 | 0,32 | 0,06 |
| H₂O als Nebel (g/h) | - | 30,3 | 17,6 | 65,3 |
| Flüssig-Additiv (g/h) | 7,5 | 7,5 | 6 | 12 |
| | | | | |

| Zusammensetzung: | | | | |
|---|---|---|---|---|
| H₂SO₄ (mol/l) | 0,05 | 0,1 | 0,05 | 0,1 |
| NaBr (mol/l) | 0,0005 | 0,001 | 0,0005 | 0,001 |
| Gasgemisch Durchsatz Nl/h | 2000 | 2000 | 1000 | 3334 |
| | | | | |
| Druck (MPa) | 2,0 | 2,0 | 1,0 | 5,0 |
| | | | | |

| Temperatur: | | | | |
|---|---|---|---|---|
| Eingang | 50 °C | 50 °C | 25 °C | 25 °C |
| Ausgang | 20 °C | 25 °C | 25 °C | 25 °C |
| Flüssigkeitsentnahme ml/h | 23 | 70 | 26 | 104 |
| | | | | |
| H₂O₂-Konzentration (Gew.-%) | 30,5 | 29,1 | 9,7 | 26,4 |
| | | | | |
| Volumenverhältnis Gas (Nl/h) zu Flüssigkeit (l/h) | 86 · 10³ | 29 · 10³ | 39 · 10³ | 32 · 10³ |

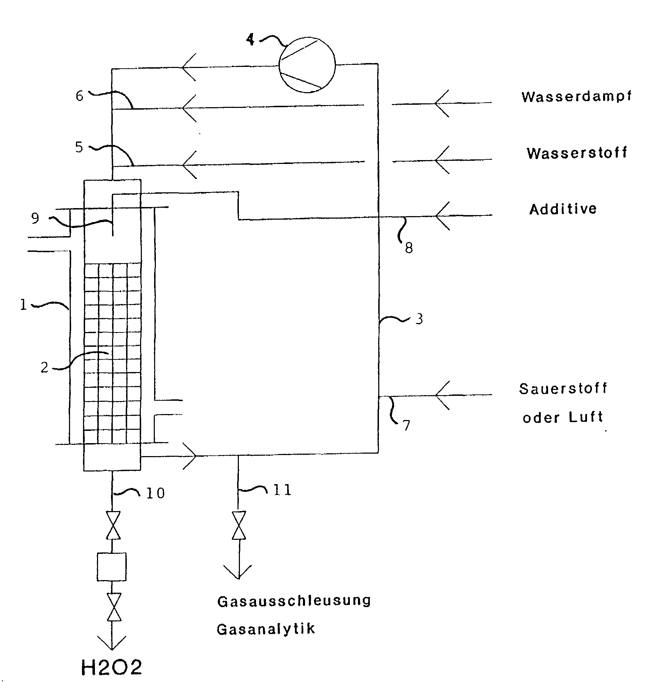

## Patentansprüche

1. Verfahren zur Herstellung einer wäßrigen Lösung von Wasserstoffperoxid, umfassend eine direkte Synthese aus Wasserstoff und Sauerstoff, wobei ein Wasserstoff und Sauerstoff enthaltendes Gasgemisch in Gegenwart von Wasser kontinuierlich über die Oberfläche eines in einem Reaktor als Festbett oder Wandbeschichtung angeordneten heterogenen Katalysators strömt und die gebildete wäßrige Wasserstoffperoxidlösung am unteren Ende des Reaktors entnommen wird,
**dadurch gekennzeichnet,**
**daß** man dem Reaktor ein Wasserstoff und Sauerstoff enthaltendes Gasgemisch zuführt, das an Wasserdampf im wesentlichen gesättigt oder übersättigt ist, innerhalb des Reaktors einen Teil des Wasserdampfes zur Kondensation und/oder Koaleszenz bringt, ein Verhältnis von eingeführtem Gasgemisch (Nl/h) zu entnommener Flüssigkeit (l/h) von gleich oder größer 15.000 einstellt und das den Reaktor verlassende Gasgemisch nach Aufstockung mit Wasserstoff, Sauerstoff und Wasserdampf rezykliert.

2. Verfahren nach Anspruch 1,
**dadurch gekennzeichnet,**
**daß** man das Verhältnis von eingeführtem Gasgemisch (Nl/h) zu entnommener Flüssigkeit (l/h) auf Werte im Bereich von 20.000 bis 50.000 einstellt.

3. Verfahren nach Anspruch 1 oder 2,
**dadurch gekennzeichnet,**
**daß** man dem Reaktor ein an Wasserdampf übersättigtes Gasgemisch zuführt.

4. Verfahren nach einem der Ansprüche 1 bis 3,
**dadurch gekennzeichnet,**
**daß** man dem Reaktor ein Gasgemisch mit 3 bis 5 Vol.-% Wasserstoff und 10 bis 20 Vol.-%, insbesondere 18 bis 19 Vol.-%, Sauerstoff zuführt.

5. Verfahren nach einem der Ansprüche 1 bis 4,
**dadurch gekennzeichnet,**
**daß** man die Umsetzung bei einer Temperatur im Bereich von 20 bis 70 °C und einem Druck von 0,1 bis 10 MPa, insbesondere 1 bis 5 MPa, durchführt.

6. Verfahren nach einem der Ansprüche 1 bis 5,
**dadurch gekennzeichnet,**
**daß** der heterogene Katalysator ein oder mehrere Metalle aus der 8. Nebengruppe des Periodensystems, insbesondere ein Edelmetall aus der Reihe Ru, Rh, Pd und Pt, enthält.

7. Verfahren nach Anspruch 6,
**dadurch gekennzeichnet,**
**daß** der Katalysator an einen Träger aus der Reihe von Aktivkohle, anorganischen Metalloxiden, insbesondere SiO₂, Al₂O₃, ZrO₂, TiO₂ und Silikaten, insbesondere sauren Silikaten mit Zeolithstruktur, gebunden ist.

8. Verfahren nach einem der Ansprüche 1 bis 7,
**dadurch gekennzeichnet,**
**daß** man einen trägergebundenen Katalysator mit einer mittleren Partikelgröße von 0,05 bis 3 mm als Festbett in einem rohrförmigen Rieselbettreaktor anordnet.

9. Verfahren nach einem der Ansprüche 1 bis 8,
**dadurch gekennzeichnet,**
**daß** man die Umsetzung in Gegenwart einer Säure, insbesondere einer Mineralsäure, und/oder eines Halogenids, insbesondere Bromids, durchführt.

## Claims

1. Process for the preparation of an aqueous solution of hydrogen peroxide comprising a direct synthesis from hydrogen and oxygen, wherein a gas mixture comprising hydrogen and oxygen flows continuously in the presence of water over the surface of a heterogeneous catalyst arranged as a fixed bed or wall coating in a reactor and the aqueous hydrogen peroxide solution formed is removed at the lower end of the reactor,
**characterized in that**
a gas mixture which comprises hydrogen and oxygen and is substantially saturated or supersaturated in water vapour is fed to the reactor, some of the water vapour is brought to condensation and/or coalescence within the reactor, a ratio of gas mixture introduced (Nl/h) to liquid removed (l/h) of equal to or greater than 15,000 is established and the gas mixture leaving the reactor is recycled, after concentrating up in hydrogen, oxygen and water vapour.

2. Process according to claim 1,
**characterized in that**
the ratio of gas mixture introduced (Nl/h) to liquid removed (l/h) is adjusted to values in the range from 20,000 to 50,000.

3. Process according to claim 1 or 2,
**characterized in that**
a gas mixture supersaturated in water vapour is fed to the reactor.

4. Process according to one of claims 1 to 3,
**characterized in that**
a gas mixture with 3 to 5 vol.% hydrogen and 10 to 20 vol.%, in particular 18 to 19 vol.% oxygen is fed to the reactor.

5. Process according to one of claims 1 to 4,
**characterized in that**
the reaction is carried out at a temperature in the range from 20 to 70 °C under a pressure of 0.1 to 10 MPa, in particular 1 to 5 MPa.

6. Process according to one of claims 1 to 5,
**characterized in that**
the heterogeneous catalyst comprises one or more metals from sub-group 8 of the periodic table, in particular a noble metal from the series consisting of Ru, Rh, Pd and Pt.

7. Process according to claim 6,
**characterized in that**
the catalyst is bonded to a support from the series consisting of active charcoal, inorganic metal oxides, in particular SiO₂, Al₂O₃, ZrO₂, TiO₂ and silicates, in particular acid silicates with a zeolite structure.

8. Process according to one of claims 1 to 7,
**characterized in that**
a catalyst bonded to a support and having an average particle size of 0.05 to 3 mm is arranged as a fixed bed in a tubular trickle bed reactor.

9. Process according to one of claims 1 to 8,
**characterized in that**
the reaction is carried out in the presence of an acid, in particular a mineral acid, and/or a halide, in particular bromide.

## Revendications

1. Procédé de production d'une solution aqueuse de peroxyde d'hydrogène, comprenant une synthèse directe d'hydrogène et d'oxygène, dans lequel un mélange gazeux contenant de l'hydrogène et de l'oxygène passe de façon continue en présence d'eau sur la surface d'un catalyseur hétérogène disposé dans un réacteur sous forme de lit solide ou de revêtement de paroi, et la solution aqueuse de peroxyde d'hydrogène formée est prélevée à l'extrémité inférieure du réacteur,
**caractérisé en ce qu'**
on introduit dans le réacteur un mélange gazeux contenant de l'hydrogène et de l'oxygène, qui est essentiellement saturé ou sursaturé en vapeur d'eau, à l'intérieur du réacteur on amène à condensation et/ou coalescence une partie de la vapeur d'eau, on établit un rapport du mélange gazeux introduit (Nl/h) au liquide prélevé (l/h) égal ou supérieur à 15 000, et on recycle le mélange gazeux quittant le réacteur après l'avoir chargé en hydrogène, oxygène et vapeur d'eau.

2. Procédé selon la revendication 1,
**caractérisé en ce qu'**
on établit le rapport du mélange gazeux introduit (Nl/h) au liquide prélevé (l/h) à des valeurs allant de 20 000 à 50 000.

3. Procédé selon la revendication 1 ou 2,
**caractérisé en ce qu'**
on introduit dans le réacteur un mélange gazeux sursaturé en vapeur d'eau.

4. Procédé selon l'une des revendications 1 à 3,
**caractérisé en ce qu'**
on introduit dans le réacteur un mélange gazeux comportant de 3 à 5 % en volume d'hydrogène et de 10 à 20 % en volume, en particulier de 18 à 19 % en volume d'oxygène.

5. Procédé selon l'une des revendications 1 à 4,
**caractérisé en ce qu'**
on conduit la réaction à une température allant de 20 à 70°C et à une pression de 0,1 à 10 MPa, en particulier de 1 à 5 MPa.

6. Procédé selon l'une des revendications 1 à 5,
**caractérisé en ce que**
le catalyseur hétérogène contient un ou plusieurs métaux du huitième sous-groupe de la classification périodique des éléments, en particulier de la série Ru, Rh, Pd et Pt.

7. Procédé selon la revendication 6,
**caractérisé en ce que**
le catalyseur est lié à un support de la série du charbon actif, des oxydes métalliques inorganiques, en particulier SiO₂, Al₂O₃, ZrO₂, TiO₂ et des silicates, en particulier des silicates acides à structure de zéolithe.

8. Procédé selon l'une des revendications 1 à 7,
**caractérisé en ce qu'**
on dispose un catalyseur lié à un support, ayant une taille particulaire moyenne de 0,05 à 3 mm sous forme de lit fixe dans un réacteur tubulaire à lit fluidisé.

9. Procédé selon l'une des revendications 1 à 8,
**caractérisé en ce qu'**
on conduit la réaction en présence d'un acide, en particulier d'un acide minéral, et/ou d'un halogénure, en particulier d'un bromure.
